# EUROPEAN PATENT APPLICATION

(11) **EP 1 903 310 A2**
(43) Date of publication of application: **26.03.2008**
(21) Application number: 07018403.1
(22) Date of filing: 19.09.2007
(51) Int. Cl.: G01C 21/36

(54) **Vehicle navigation system including camera unit**

(30) Priority: 19.09.2006 KR 20060090395
(71) Applicant: Reigncom Ltd., Gangnam-gu 135-739 Seoul (KR)
(72) Inventor: Choi, Moonkyu, Gangnam-gu Seoul (KR)
(74) Representative: Samson & Partner

(57) **Abstract**

The present invention relates to a vehicle navigation system. The vehicle navigation system includes a navigation information provider for providing navigation information comprising at least one of origination information, vehicle location information and destination information for guiding a driver to a desired destination, a display unit for displaying the navigation information, a camera unit for generating a front-view image by photographing a front-view of a vehicle, and a front-view image storage for storing the front-view image and receiving the vehicle location information from the navigation information provider. Moreover, the front-view image storage associates the front-view image with vehicle location information corresponding to a location where the front-view image is photographed.

## Description

### CROSS-REFERENCE TO RELATED APPLICATIONS

Pursuant to 35 U.S.C. § 119(a), this application claims the benefit of earlier filing date and right of priority to Korean Application No. 10-2006-0090395 filed on September 19, 2006, the contents of which are hereby incorporated by reference herein in their entirety.

### FIELD OF THE INVENTION

The present invention relates to a vehicle navigation system for a vehicle, and in particular to a navigation system including a camera unit, wherein a destination location is photographed and stored.

### BACKGROUND OF THE INVENTION

Conventionally, a vehicle navigation system searches for an optimized route between an origin and a destination using map data. When the optimized route is obtained, a route guide to the destination is calculated by evaluating a current location of the vehicle to the map data, wherein the current location is attained via a Global Positioning System (GPS) satellite signal. The route guide may be visually provided through a display screen, or audibly provided through a speaker, of the navigation system.

In order to calculate the route guide, the destination must be inputted into the navigation system. However, because an inputting means of the navigation system is limited to a touch screen or a few input buttons, the destination is entered by inputting a destination address through a complex key-inputting procedure. Therefore, a driver is distracted when inputting the destination while driving.

To solve the above-described problem, the related art has provided for a navigation system, wherein destination addresses are inputted in advance and stored in a storage means of a data generator. The addresses are selectively listed on a menu such as a "recently used route guide" menu, for example. Accordingly, when the driver wishes to travel to a destination, the driver may select one of the addresses listed on the menu corresponding to the destination. Thus, in the related art, it is not necessary to input the destination address every time the driver chooses the destination to travel to.

However, the above-described navigation system is problematic. For example, the driver may recall a desired destination via a building exterior or a destination's surroundings rather than by destination address, which may consist of a building number, street name, lot number or region name provided by the route guide. Accordingly, the driver may not associate the desired destination with the address provided by the navigation system, especially when the driver has not visited the destination for some time. Moreover, because the address may include a long string of characters, it is difficult to display the address on one line of a small display of the navigation system. Thus, the driver may not be able to immediately recognize the address.

### SUMMARY OF THE INVENTION

The present invention is directed to a vehicle navigation system.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a vehicle navigation system comprising a navigation information provider for providing navigation information comprising at least one of origination information, vehicle location information and destination information for guiding a driver to a desired destination, a display unit for displaying the navigation information, a camera unit for generating a front-view image by photographing a front-view of a vehicle, and a front-view image storage for storing the front-view image and receiving the vehicle location information from the navigation information provider, wherein the front-view image storage associates the front-view image with vehicle location information corresponding to a location where the front-view image is photographed.

In one aspect of the invention, the vehicle navigation system further comprises a camera controller for controlling the camera unit to generate a destination image when the vehicle is determined to be proximal to the desired destination. In another aspect of the invention, the camera unit is disposed on an opposite side of the display unit. Alternatively, the camera unit is installed separately from a main body of the navigation system in the vehicle, wherein the camera unit is operatively connected to the main body of the navigation system by wired or wireless communication.

Preferably, the navigation system displays a list of at least one generated destination images when the driver requests to select the desired destination.

In one aspect of the invention, the camera controller controls the camera unit to generate a sectional image by photographing the front-view of the vehicle when a travel section changes according to the travel of the vehicle. Preferably, the navigation system further comprises a travel report generator for generating a sectional travel report for at least one travel section the vehicle travels through, the sectional travel report comprising at least one of the sectional image, a name of the photograph location and a photograph time.

In another aspect of the invention, the camera controller controls the camera unit to generate a periodic image by photographing the front-view of the vehicle after a predetermined interval has elapsed. Preferably, the navigation system further comprises a travel report generator for generating a periodic travel report for at least one predetermined interval, the periodic travel report comprising at least one of the periodic image, a name of the photograph location and a photograph time.

In accordance with another embodiment of the present invention, a method for configuring navigation to a destination in a vehicle navigation system comprises selecting a desired destination, providing navigation information comprising at least one of origination information, vehicle location information and destination information for guiding a driver to the desired destination, displaying the navigation information, generating a front-view image by photographing a front-view of a vehicle, storing the front-view image, and associating the front-view image with vehicle location information corresponding to a location where the front-view image is photographed.

Preferably, the method further comprises generating a destination image when the vehicle is determined to be proximal to the desired destination. Preferably, the method further comprises displaying a list of at least one generated destination images when the driver requests to select the desired destination.

In one aspect of the invention, the method further comprises generating a sectional image by photographing the front-view of the vehicle when a travel section changes according to the travel of the vehicle. Preferably, the method further comprises generating a sectional travel report for at least one travel section the vehicle travels through, the sectional travel report comprising at least one of the sectional image, a name of the photograph location and a photograph time.

In another aspect of the invention, the method further comprises generating a periodic image by photographing the front-view of the vehicle after a predetermined interval has elapsed. Preferably, the method further comprises generating a periodic travel report for at least one predetermined interval, the periodic travel report comprising at least one of the periodic image, a name of the photograph location and a photograph time.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

Fig. 1 is a diagram illustrating a navigation system in accordance with an embodiment of the present invention.

Fig. 2 is a front-view and a rear-view of a navigation system in accordance with an embodiment of the present invention.

Fig. 3 is a diagram exemplifying a destination selection screen of a navigation system in accordance with an embodiment of the present invention.

Fig. 4 is a diagram exemplifying a sectional travel report generated by a navigation system in accordance with an embodiment of the present invention.

Fig. 5 is a diagram exemplifying a periodic travel report generated by a navigation system in accordance with an embodiment of the present invention.

Fig. 6 is a flow diagram illustrating a method for configuring a destination in a navigation system in accordance with an embodiment of the present invention.

### DETAILED DESCRIPTION OF THE PREFERRED EMBODIMENTS

The present invention relates to a vehicle navigation system and will now be described in detail with reference to the accompanied drawings.

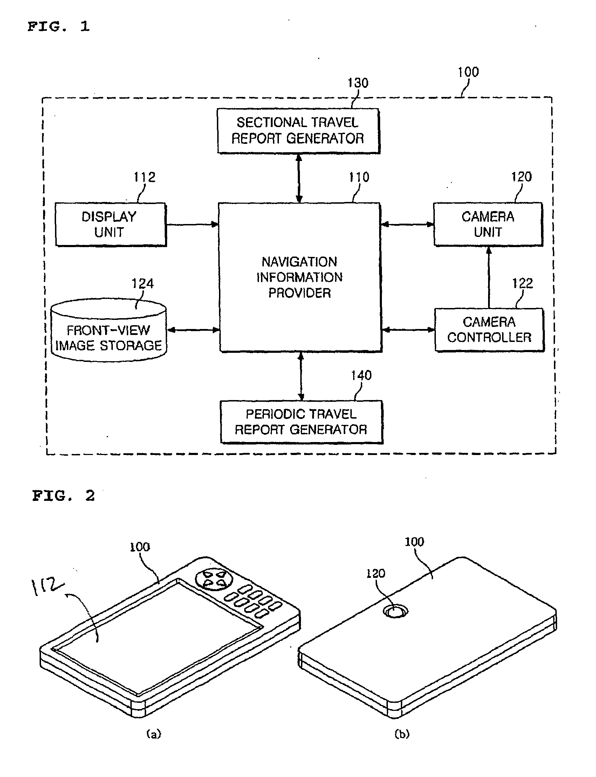

Fig. 1 illustrates a diagram of a navigation system in accordance with an embodiment of the present invention. Referring to Fig. 1, a vehicle navigation system 100 comprises a navigation information provider 110, a display unit 112, a camera unit 120, a front-view image storage 124, a camera controller 122, a sectional travel report generator 130 and a periodic travel report generator 140.

The navigation information provider 110 provides navigation information including origination information, vehicle location information and destination information for guiding a driver to a desired destination via a driving route, for example. Preferably, the navigation system 100 is provided with map information from a map storage or communication network, and a route from an origin to a destination is selected using the map information via a route searching algorithm. The navigation system 100 then provides navigational directions to the driver by recognizing a current location, speed and direction of the vehicle obtained via a Global Positioning System (GPS) signal.

The display unit 112 displays the route for a driver upon receiving the navigation information from the navigation information provider 110. Preferably, the camera unit 120 photographs a view in front of the vehicle to generate a front-view image. The camera unit 120 may comprise a CMOS camera module or CCD camera module, for example. Because the camera unit 120 generates the front-view image while the vehicle is moving, a camera lens thereof is preferably behind a windshield, or is installed on a frontal exterior, of the vehicle.

Fig. 2 is a front-view and a rear-view of the navigation system in accordance with an embodiment of the present invention. Referring to Fig. 2, when the camera unit 120 is fixedly attached to an opposite side of the display unit 112, the navigation system 100 is preferably installed behind the windshield such that the display unit 112 faces the driver and the camera unit 120 faces the windshield. However, if the navigation system 100 is fixedly installed in a vehicle's center fascia, such as an in-dash type navigation system, the camera unit 120 may be installed at a position that allows the front view of the vehicle to be photographed regardless of the installed position of the navigation system 100. Hence, in one aspect of the invention, the camera unit 120 may be installed separately from the navigation system 100 and operatively connected by wired or wireless communication. Accordingly, the camera unit 120 may communicate with a main body of the navigation system 100 via cable, bluetooth communication, WiFi communication or infrared communication, for example.

Preferably, the front-view image storage 124 stores the front-view image and receives the Vehicle location information from the navigation information provider 110. Accordingly, the front-view image storage 124 associates the front-view image with vehicle location information corresponding to a location where the front-view image is photographed. Preferably, the association between the front-view image and corresponding vehicle location information is stored. Preferably, the front-view image storage 124 may comprise a flash memory, a hard disk drive, or an optical/magnetic storage medium, for example. Moreover, the front-view image storage 124 may store vehicle location information corresponding to a photographed front-view, coordinate information, address information, and a name of a surrounding area/facility for example, along with a front-view image.

Preferably, the camera controller 122 determines whether the vehicle is proximal to the destination according to the navigation information, and controls the camera unit 120 to generate a destination image. Preferably, the navigation system 100 allows the driver to select a reference distance of the proximity of the destination, such as within a 10-meter radius or 20-meter radius. In accordance with the present invention, the front-view image is generated without requiring the driver to manipulate the navigation system. Thus, the driver is allowed to concentrate on driving.

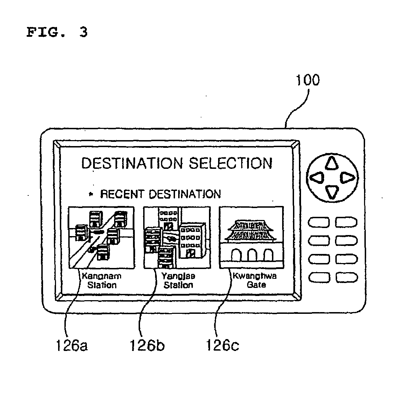

Fig. 3 is a diagram exemplifying a destination selection screen of a navigation system in accordance with an embodiment of the present invention. Referring to Fig. 3, when the driver wishes to select a destination from a group of destinations already known to the navigation system 100, the navigation system 100 searches through a number of destination images stored in the front-view image storage 124. A list of destination images 126a, 126b and 126c may then be shown on the display unit 112. Accordingly, the driver can easily recognize the desired destination by looking at the displayed images. Hence, in accordance with the present invention, the driver is not required to remember address information of the desired destination, which may consist of a complex string of characters of a hierarchical geographical name and a lot/building number. Rather, the driver may select one of the images to easily select the destination.

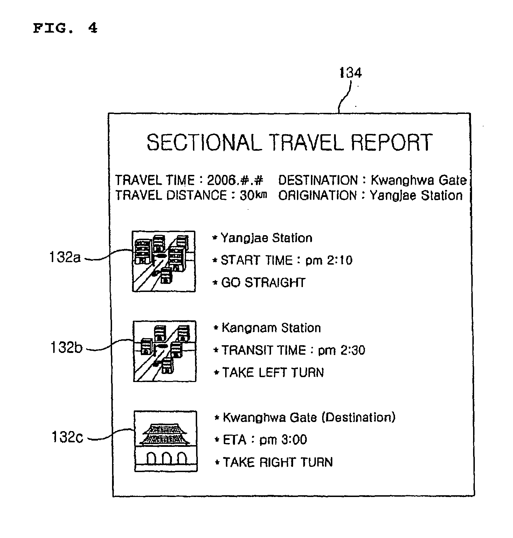

In accordance with an embodiment of the present invention, a travel report is generated through the travel report generators 130 and 140. Fig. 4 is a diagram illustrating a sectional travel report 134 generated when a vehicle moves through a travel section. Preferably, the camera controller 122 controls the camera unit 120 to generate sectional images 132a, 132b and 132c by photographing a front-view of the vehicle when a travel section changes according to the movement of the vehicle. Preferably, the travel report generator 130 generates the travel report 134 for each travel section the vehicle moves through. The travel report may include a name of the photograph location and a photograph time.

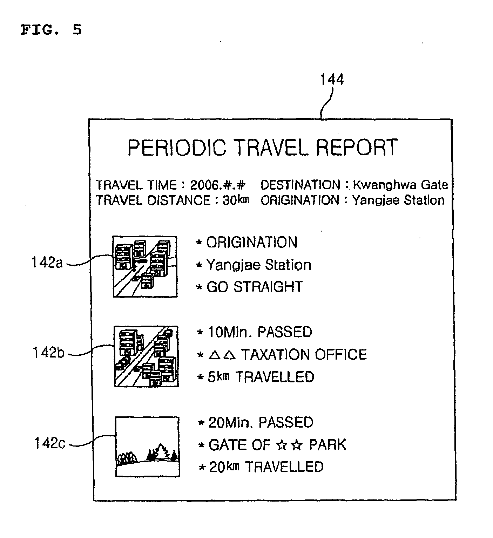

Fig. 5 is a diagram illustrating a periodic travel report 144 generated for a predetermined interval as a vehicle moves. Preferably, the camera controller 122 controls the camera unit 120 to generate periodic images 142a, 142b and 142c by photographing a front-view of the vehicle at predetermined times as the vehicle moves. Preferably, the travel report generator 140 generates the travel report 144 for each predetermined interval. The travel report may include a name of the photograph location and a photograph time.

In accordance with the present invention, the driver is able to analyze a travel section via the sectional travel report 134 and the periodic travel report 144, which include surrounding images of the travel section. While the travel reports 134 and 144 may be provided on a screen of the display unit 112, the travel reports 134 and 144 may also be communicated through a communication network. Accordingly, the travel reports may be converted to various formats, such as an HTML document format that may be shared, or an MMS (Multimedia Message System) message that may be transmitted through a mobile communication system.

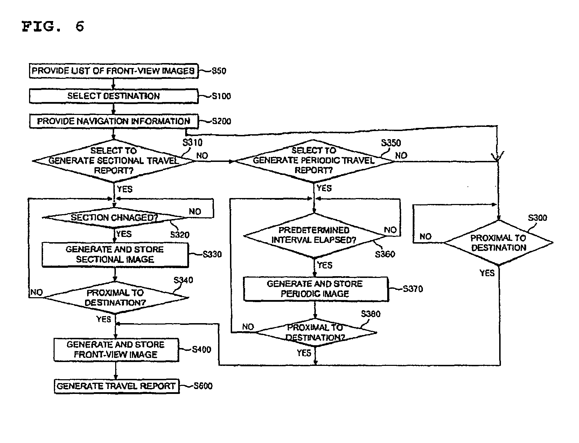

Fig. 6 is a flow diagram illustrating a method for configuring a destination in a navigation system in accordance with an embodiment of the present invention. Referring to Figs. 3 and 6, when the navigation system 100 provides the list of front-view images 126a, 126b and 126c stored in the front-view image storage 124 to the driver (S50), the driver may select a destination to travel to by selecting one of the front-view images 126a, 126b and 126c (S100).

Thereafter, navigation information is displayed according to the travel of the vehicle (S200). Preferably, navigational directions are provided to the driver similar to a conventional navigation system.

Subsequently, it is determined whether the vehicle is proximal to the destination (S300). When the vehicle is determined to be proximal to the destination, the camera unit 120 is controlled to photograph a perimeter of the destination (S400). Accordingly, images such as the front-view images 126a, 126b and 126c may be generated and stored along with corresponding location information of the point of photography (S400).

Referring to Figs. 4 and 6, when the driver wishes to generate a sectional travel report 134 (S310), the method further comprises generating a sectional image by controlling the camera unit 120 to photograph a vehicle's front-view when the travel section changes according to the travel of the vehicle, and storing the sectional image (S320, S330). After the perimeter of the destination is photographed (S400), the sectional travel report 134 for each travel section traveled through, including the sectional images 132a, 132b and 132c, a name of the photograph location, and a photograph time, is generated (S600).

Referring to Figs. 5 and 6, when the driver wishes to generate a periodic travel report 144 (S350), the method further comprises generating periodic images for each predetermined interval by controlling the camera unit 120 to photograph the vehicle's front-view as the vehicle travels after a predetermined interval has elapsed, and storing the periodic image (S360, S370). After the perimeter of the destination is photographed (S400), the periodic travel report 144 for each predetermined interval, including the sectional images 142a, 142b and 142c, a name of the photograph location, and a photograph time, is generated (S700).

As described above, in accordance with the navigation system including the camera unit and the method for configuring the destination, an image of a vehicle's front-view photographed by a camera unit is stored along with at least one of corresponding coordinate information, address information and a name of a surrounding facility. Thus, when the driver wishes to return to the location of the image, the driver is not required to remember the location's address. Rather, the driver can easily select the image from a number of images provided by the navigation system, wherein the navigation system will then provide the driver with directions to the destination.

In accordance with the navigation system including the camera unit and the method for configuring the destination, an image of a vehicle's front-view is automatically generated and stored along with the location information when the vehicle is proximal to the destination during the navigation. Thus, the driver is not required to additionally operate the navigation system in order to generate the front-view image.

In accordance with the navigation system including the camera unit and the method for configuring the destination, an image of a vehicle's front-view is automatically generated and stored when a route changes, or on a periodic basis, according to a driver's preference. Moreover, a travel report may be generated to provide information regarding the navigated route to the driver.

While the present invention has been particularly shown and described with reference to the preferred embodiment thereof, it will be understood by those skilled in the art that various changes in form and details may be effected therein without departing from the spirit and scope of the invention.

## Claims

1. A vehicle navigation system, comprising:
a navigation information provider for providing navigation information comprising at least one of origination information, vehicle location information and destination information for guiding a driver to a desired destination;
a display unit for displaying the navigation information;
a camera unit for generating a front-view image by photographing a front-view of a vehicle; and
a front-view image storage for storing the front-view image and receiving the vehicle location information from the navigation information provider,
wherein the front-view image storage associates the front-view image with vehicle location information corresponding to a location where the front-view image is photographed.

2. The vehicle navigation system of claim 1, further comprising a camera controller for controlling the camera unit to generate a destination image when the vehicle is determined to be proximal to the desired destination.

3. The vehicle navigation system of claim 1, wherein the camera unit is disposed on an opposite side of the display unit.

4. The vehicle navigation system of claim 1, wherein the camera unit is installed separately from a main body of the navigation system in the vehicle.

5. The vehicle navigation system of claim 4, wherein the camera unit is operatively connected to the main body of the navigation system by wired or wireless communication.

6. The vehicle navigation system of claim 2, wherein the navigation system displays a list of at least one generated destination images when the driver requests to select the desired destination.

7. The vehicle navigation system of claim 2, wherein the camera controller controls the camera unit to generate a sectional image by photographing the front-view of the vehicle when a travel section changes according to the travel of the vehicle.

8. The vehicle navigation system of claim 7, further comprising a travel report generator for generating a sectional travel report for at least one travel section the vehicle travels through, the sectional travel report comprising at least one of the sectional image, a name of the photograph location and a photograph time.

9. The vehicle navigation system of claim 2, wherein the camera controller controls the camera unit to generate a periodic image by photographing the front-view of the vehicle after a predetermined interval has elapsed.

10. The vehicle navigation system of claim 9, further comprising a travel report generator for generating a periodic travel report for at least one predetermined interval, the periodic travel report comprising at least one of the periodic image, a name of the photograph location and a photograph time.

11. A method for configuring navigation to a destination in a vehicle navigation system, the method comprising:
selecting a desired destination;
providing navigation information comprising at least one of origination information, vehicle location information and destination information for guiding a driver to the desired destination;
displaying the navigation information;
generating a front-view image by photographing a front-view of a vehicle;
storing the front-view image; and
associating the front-view image with vehicle location information corresponding to a location where the front-view image is photographed.

12. The method claim 11, further comprising generating a destination image when the vehicle is determined to be proximal to the desired destination.

13. The method of claim 12, further comprising displaying a list of at least one generated destination images when the driver requests to select the desired destination.

14. The method of claim 12, further comprising generating a sectional image by photographing the front-view of the vehicle when a travel section changes according to the travel of the vehicle.

15. The method of claim 14, further comprising generating a sectional travel report for at least one travel section the vehicle travels through, the sectional travel report comprising at least one of the sectional image, a name of the photograph location and a photograph time.

16. The method of claim 12, further comprising generating a periodic image by photographing the front-view of the vehicle after a predetermined interval has elapsed.

17. The method of claim 16, further comprising generating a periodic travel report for at least one predetermined interval, the periodic travel report comprising at least one of the periodic image, a name of the photograph location and a photograph time.
